# EUROPÄISCHE PATENTANMELDUNG

(11) **EP 2 901 850 A2**
(43) Veröffentlichungstag der Anmeldung: **05.08.2015**
(21) Anmeldenummer: 14004106.2
(22) Anmeldetag: 04.12.2014
(51) Int. Cl.: A01G 9/16

(54) **Verfahrbare Folienüberdachung**

(30) Priorität: 29.01.2014 DE 102014101049
(71) Anmelder: Poppen Gewächshausbau GmbH & Co. KG, 26188 Edewecht (DE)
(72) Erfinder: Knoblauch, Jörg, 26203 Wardenburg/Achternholt (DE); Poppen, Klaus, 26188 Edewecht-Jeddeloh II (DE)
(74) Vertreter: Möller, Friedrich

(57) **Zusammenfassung**

Bei bekannten zu öffnenden Folienüberdachungen wird die Überdachung nur im Dachbereich entfernt bzw. verschoben. Dabei bleiben die tragenden Seitenwände stehen, sodass zumindest ein Teil der zuvor überdachten Fläche durch Schattenwurf der Wände im Dunkeln bleibt. Außerdem deckt bei derart bekannten Vorrichtungen die zusammengefahrene Folienüberdachung einen Teil der zuvor überdachten Fläche weiterhin ab. Der Erfindung liegt die Aufgabe zugrunde, eine Vorrichtung und ein Verfahren zum Öffnen einer Folienüberdachung, insbesondere Foliengewächshaus 10, zu schaffen, das vorzugsweise flexibel in seiner Größe ist. Die Erfindung sieht es vor, dass eine Folie von Tragmitteln 12 gehalten wird, wobei die Tragmittel 12 stehend auf Schienen 22 gelagert und auf Schienen 22 verfahrbar sind.

## Beschreibung

Die Erfindung betrifft eine Folienüberdachung, insbesondere ein Foliengewächshaus, mit einer von Tragmitteln gehaltenen Folie gemäß dem Oberbegriff des Anspruchs 1. Die Erfindung betrifft des Weiteren eine Folienüberdachung, insbesondere Foliengewächshaus, wobei die Folienüberdachung in einer Umhausung staubar ist gemäß dem Oberbegriff des Hauptanspruchs 8 und eine Folienüberdachung, die gemäß dem Oberbegriff des Hauptanspruchs 13 Tragmittel aufweist. Schließlich betrifft die Erfindung ein Verfahren zum Stauen einer Folienüberdachung, insbesondere eines Foliengewächshauses, mit einer von stehend auf Schienen gelagerten Tragmitteln gehaltenen Folie gemäß dem Oberbegriff des Anspruchs 13.

Folienüberdachungen, insbesondere Foliengewächshäuser, dienen der Überdachung bzw. der Überdeckung von ansonsten frei liegenden Flächen, die vor Verwitterung bzw. vor bestimmten Wetterbedingungen geschützt werden sollen. Die derart abgedeckten Flächen können eine Größe von einigen wenigen Quadratmetern bis zu mehreren 100 m² aufweisen. Eine Abdeckung der Fläche erfolgt meistens bei feuchten, sowie kalten Klimabedingungen. Die Flächen können aber auch zum Schutz vor zu großer Sonneneinstrahlung abgedeckt werden. So werden Flächen für verschiedenste Freizeitaktivitäten durch Folien überdacht, wie beispielsweise Tennisplätze, Fußballplätze, Schwimmbäder oder dergleichen. Aber auch Lagerhallen oder große Zelte können eine Folienüberdachung aufweisen.

Aus der Landwirtschaft ist es bekannt, dass Felder bzw. Anbauflächen, großflächig durch Gewächshäuser abgedeckt werden. Gewächshäuser weisen eine transparente Abdeckung auf. Diese Abdeckungen sind meistens aus Glas oder anderen transparenten Materialien wie Folie. Insbesondere bei Gewächshäusern ist es vorgesehen, dass die zu bewirtschaftenden Anbauflächen bei ungünstigen Witterungsbedingungen im Winter und Frühling im Gewächshaus geschützt werden und in den wärmeren Monaten der direkten Sonne ausgesetzt werden. Es ist bekannt, dass Gewächshäuser, insbesondere Gewächshäuser aus Glas, im Frühling abgebaut werden, das heißt, dass die Glaselemente einzeln deinstalliert werden. Außerdem ist es bekannt, dass Gewächshäuser Klappen bzw. Fenster aufweisen, die bei Bedarf geöffnet und geschlossen werden können.

Für Gewächshäuser mit einer Folienüberdachung ist es bekannt, dass ihre Längsseiten jalousiearitg geöffnet werden können. Des Weiteren ist bekannt, dass für Gewächshäuser mit einer hängend an der Überdachung befestigten Folie, zum Öffnen des Dachs die Folie zu einer Querseite des Gewächshauses verschiebbar ist.

Bei der bekannten zu öffnenden Folienüberdachung wird diese jedoch nur im Dachbereich entfernt bzw. verschoben. Dabei bleiben die tragenden Seitenwände stehen, sodass zumindest ein Teil der freizugebenden Fläche durch Schattenwurf der Wände dunkel bleibt. Außerdem deckt bei derart bekannten Vorrichtungen die zusammengefahrene Folienüberdachung einen Teil der Fläche weiterhin ab.

Ein weiterer Nachteil bekannter Folienüberdachungen, insbesondere Foliengewächshäuser, besteht darin, dass die Tragmittel für die Folie, der abzudeckenden Fläche entsprechend, angefertigt werden. Eine individuelle Veränderung der Größe, oder auch die spätere Anpassung der Überdachung bzw. der Tragmittel an die aktuellen Anforderungen ist dann nicht mehr möglich, oder nur mit einem hohen Kostenaufwand zu bewerkstelligen.

Der Erfindung liegt nun die Aufgabe zugrunde, eine Vorrichtung und ein Verfahren zum Öffnen einer Folienüberdachung, insbesondere Foliengewächshaus, zu schaffen, das vorzugsweise flexibel in seiner Größe ist.

Eine Vorrichtung zur Lösung dieser Aufgabe weist die Merkmale des Anspruchs 1 auf. Bei dieser Vorrichtung, bei der es sich um eine Folienüberdachung, insbesondere um ein Foliengewächshaus, handelt, ist es vorgesehen, dass eine Folie von Tragmitteln gehalten wird, wobei die Tragmittel stehend auf Schienen gelagert sind. Diese die Folie haltende Tragmittel sind außerdem auf einer Schiene verfahrbar. Die Tragmittel weisen im Wesentlichen eine durch einen Querschnitt der Folienüberdachung, insbesondere Foliengewächshauses, definierten Form auf. Die Tragmittel sind jedoch nicht auf diese Form beschränkt. Die Folie ist dabei fest mit dem Tragmittel verbunden. Bevorzugt ist es vorgesehen, dass die Tragmittel aus einem Aluminiumprofil bzw. aus Stahlträgern aufgebaut sind.

Vorzugsweise sieht es die Erfindung weiter vor, dass die Schienen parallele zu einer Längsachse der Folienüberdachung orientiert sind, entlang der die Tragmittel verfahrbar sind und auf der Erde oder Erhöhungen, zum Beispiel Wänden, Tragwänden oder dergleichen, angeordnet sind. Für ein einzelnes Foliengewächshaus ist es vorgesehen, dass die Tragmittel auf zwei parallelen Schienen, die wiederum parallel zu der Längsachse des Gewächshauses orientiert sind, verfahrbar sind. Es ist aber auch denkbar, dass ein Gewächshaus mehr als zwei Schienen aufweist. Insbesondere bei großflächigen Überdachungen ist es vorgesehen, dass das Foliengewächshaus mehrere, bzw. eine Vielzahl von parallelen Schienen, aufweist denen jeweils Tragmittel mit Folien zugeordnet sind. Die Folien benachbarter bzw. parallelen Gewächshäuser könne offen sein.

Die Schienen auf denen die Tragmittel verfahrbar sind, sind direkt auf der Erde angeordnet und dort mit einer Verankerung im Erdreich fest verbunden. Die Schienen können jedoch auch auf einer Erhöhung angeordnet sein. Derartige Erhöhungen können beispielsweise Wände oder sonstige Tragwerke sein, wie sie aus der Blockbauweise bekannt sind. So ist es besonders für großflächig zu überdachende Anbauflächen vorgesehen, dass einzelne Bereiche dieser Fläche durch Erhöhungen abgetrennt sind, auf denen die Schienen für die Tragmittel befestigt sind. Die Folienüberdachung steht dann mit den Tragmitteln auf diesen Schienen. Die Erhöhung kann eine Höhe von einigen Zentimetern bis zu wenigen Metern aufweisen.

Weiter ist es insbesondere vorgesehen, dass die Tragmittel unten offene Tragbögen sind. Die Tragbögen weisen freie Enden auf, denen jeweils ein Fahrwerk zugeordnet ist. Somit sind vorzugsweise jedem Tragbogen zwei Fahrwerke zugeordnet, mit denen die Tragbögen bzw. Tragmittel stehend auf Schienen verfahrbar sind.

Eine bevorzugte Ausgestaltung der Erfindung sieht es vor, dass die Schienen aus zwei parallelen Schienensträngen gebildet sind, denen mindestens ein Fahrwerk, vorzugsweise eine der Anzahl der Tragbögen entsprechende Anzahl von Fahrwerken, zugeordnet ist. Bei diesen Schienensträngen kann es sich vorzugsweise um Rohre, T-Träger, DoppelT-Träger oder Ähnliches handeln. Bei rohrförmigen Schienensträngen ist es weiter denkbar, dass die Rohre genutzt werden, um das Gewächshaus mit Elektrizität oder Wasser zu versorgen. Diesen parallelen Schienensträngen ist jeweils ein Fahrwerk eines freien Endes des Tragbogens bzw. Tragmittels zugeordnet. Somit sind einem Tragbogen zwei Fahrwerke und zwei Paare Schienenstränge (vier Schienenstränge) zugeordnet. Da das Foliengewächshaus aus einer Vielzahl von hintereinander positionierten bogenförmigen Tragmitteln besteht, sind den Schienensträngen eine entsprechende Anzahl von Fahrwerken zugeordnet. Die einzelnen bogenförmigen Tragmittel sind untereinander durch die Folie miteinander verbunden. Der Abstand der einzelnen Tragmittel kann einigen Dezimeter bis Meter betragen.

Bevorzugt sieht es die Erfindung vor, dass das Fahrwerk zwei parallele Gruppen von Laufrädern aufweist, wobei jedem Schienenstrang eine Gruppe zugeordnet ist und die Laufräder einer Unter- und/oder einer Oberseite des Schienenstrangs zugeordnet sind. Eine Gruppe von Laufrädern weist mehrere, vorzugsweise drei Laufräder auf. Die drei Laufräder sind derart angeordnet, dass ihre Achsen die Eckpunkte eines Dreiecks bilden. Zwei Laufräder sind einer Oberseite eines Schienenstrangs zugeordnet und das dritte Laufrad einer entsprechenden Unterseite desselben Schienenstrangs, so dass der Schienenstrang von diesen drei Laufrädern umfasst wird. Die Gruppe von Laufrädern ist somit fest dem Schienenstrang zugeordnet. Es ist auch denkbar, dass die Gruppe nur zwei oder mehr als drei Laufräder aufweist und auf eine entsprechende Art und Weise in einem festen Zusammenhang mit dem Schienenstrang steht.

Insbesondere ist es vorgesehen, dass die parallele Gruppe von Laufrädern eines Fahrwerks derart in Richtung der Längsachse versetzt ist, dass die Fahrwerke zweier aufeinanderfolgender Tragmittel ineinander fahrbar sind. So ist es erfindungsgemäß vorgesehen, dass die beiden parallelen Gruppen von Laufrädern durch eine Halterung miteinander verbunden sind, die der Form eines langgezogenen "Z" ähnelt. Die Gruppen sind jeweils Außenflächen eines oberen und unteren Bereichs des langgezogenen "Z" zugeordnet. Zwei auf den Schienensträngen aufeinanderfolgende Fahrwerke zweier Tragmittel sind durch die beschriebene Form eines langgezogenen "Z" derart ineinander fahrbar, dass sich die Gruppen von Laufrädern, die demselben Schienenstrang zugeordnet sind, nahezu berühren bzw. berühren. Im zusammengefahrenen Zustand zweier aufeinanderfolgender Fahrwerke liegen sich jeweils zwei Gruppen von Laufrädern nachfolgender Fahrwerke parallel gegenüber.

Erfindungsgemäß ist es weiter vorgesehen, dass sich die Folie zwischen zwei aufeinanderfolgenden Tragmitteln bei Verringerung des Abstands der aufeinanderfolgenden Tragmittel zwischen die Tragmittel fügt, insbesondere faltet. Durch Verfahren der Tragmittel entlang der Längsachse des Foliengewächshauses wird der Abstand der Fahrwerke bzw. der Tragmittel verkleinert. Das führt dazu, dass die Folie aus ihrem anfänglich zwischen zwei aufeinanderfolgenden Tragmittel gespannten Zustand in einen Zustand gebracht wird, bei dem die Folie zwischen zwei aufeinanderfolgenden Tragmittel herabhängt.

Eine weitere Vorrichtung zur Lösung der eingangs genannten Aufgabe weist die Merkmale des Anspruchs 5 auf. Demnach ist es erfindungsgemäß vorgesehen, dass die Tragmittel mit der Folie in eine Umhausung staubar sind. Dadurch wird es ermöglicht, die Folienüberdachung, insbesondere das Foliengewächshaus, bei schlechter Witterung aus einer Umhausung heraus über die zu schützende Fläche zu fahren, bzw. bei entsprechender Witterung die Folienüberdachung, insbesondere das Foliengewächshaus, in die Umhausung hineinzufahren bzw. zu verstauen. Die Umhausung zum Stauen der Tragmittel mit der Folie kann auch als eine Garage ausgebildet sein. Bevorzugt ist die Umhausung aus einem festen Material, insbesondere einer festen Folie, Blech, Holz oder Ähnlichem hergestellt.

Eine bevorzugte Weiterbildung sieht es vor, dass die Tragmittel mit den Folien nacheinander bzw. hintereinander in der Umhausung verstaubar sind, und zwar beginnend mit einem einem Stauende der Folienüberdachung nächsten Tragmittel. Vorzugsweise ist es vorgesehen, dass die Tragmittel am Stauende zusammenlaufen. Dadurch, dass die gesamte Folienüberdachung entlang einer Längsachse in Richtung der Umhausung bewegt wird, aber nur die dem Stauende zugeordneten Tragmittel verstaut werden, befindet sich die noch nicht verstaute Folienüberwachung in einem Zustand mit gespannter Folie. Daher ist es denkbar, dass die Folienüberdachung nur teilweise verstaut wird, so dass die abzudeckende Fläche nur teilweise von der Folienüberdachung abgedeckt wird.

Ein weiteres bevorzugtes Ausführungsbeispiel sieht es vor, dass jedem Tragmittel mindestens ein Führungsseil zugeordnet ist, vorzugsweise einem Ende jedes Tragmittels dasselbe Führungsseil zugeordnet ist, wobei die Führungsseile beim Verstauen der Tragmittel von jedem Tragmittel einzeln abkoppelbar sind. Es ist auch denkbar, dass die Führungsseile dem Fahrwerk der Tragmittel zugewiesen sind.

Insbesondere sieht es die Erfindung vor, dass die Umhausung eine äußere Wandung und eine innere Wandung aufweist, zwischen denen die Tragmittel und die Folie staubar sind. Außerdem ist es vorgesehen, dass die Umhausung eine Stirnseite aufweist mit einer Öffnung, beispielsweise einem verschließbaren Tor. Durch dieses Tor kann das Gewächshaus beispielsweise bewirtschaftet werden. Es ist außerdem vorgesehen, dass die Folienüberdachung, insbesondere das Foliengewächshaus, eine der Stirnseite der Umhausung gegenüberliegende Wandung aufweist, die das Foliengewächshaus im ausgefahrenen Zustand verschließt. Dabei gehen die Tragmittel bzw. die Folie mit der Stirnwandung eine feste, verschließbare Verbindung ein. Diese weitere Stirnseite kann ebenfalls Öffnungen wie eine Tür oder ein Tor aufweisen. Es ist weiter denkbar, dass dem der Umhausung gegenüberliegenden Ende der Folienüberdachung, insbesondere Foliengewächshaus, ein Verbindungssegment zugeordnet ist. Dieses Verbindungssegment kann ein festes Bogenelement darstellen, dass mit der Form des Querschnitts der Folienüberdachung korrespondiert. Dieses Verbindungssegment dient dazu, zwei gegenüberliegende einzelne Folienüberdachungen bzw. Foliengewächshäuser an ihren offenen Enden derart zu verbinden, dass ein Gewächshaus gebildet wird mit der doppelten Länge als die einzelnen Gewächshäuser für sich.

Bevorzugt ist es weiter vorgesehen, dass der Umhausung Mittel, vorzugsweise Motoren, zugewiesens sind, um die Tragmittel an den Führungsseilen wieder in der Umhausung zu stauen oder aus der Umhausung herauszufahren. Dabei ist es vorgesehen, dass jeder Schiene nur ein Motor zugewiesen ist. Durch diesen einen Motor lässt sich durch das Führungsseil die Umhausung zusammenstauen oder aus der Umhausung herausfahren. Dabei verläuft das Führungsseil von dem Motor entlang der Schiene bis zum Ende der Schiene, wo es durch eine Umlenkrolle zurückgeführt wird.

Eine weitere Vorrichtung zur Lösung der eingangs genannten Aufgabe weist die Merkmale des Anspruchs 10 auf. Demnach ist es vorgesehen, dass die Tragmittel aus mehreren Grundelementen verschiedener Sorten aufgebaut sind. Es ist aber auch denkbar, dass die Tragmittel einteilig ausgebildet sind.

Bevorzugst ist es weiter erfindungsgemäß vorgesehen, dass die Tragmittel aus zwei oder drei verschiedenen Sorten von Grundelementen aufgebaut sind. Dabei ist eine Sorte von Grundelement gebogen und eine andere gerade. Die Grundelemente sind Profilrohre bzw. Profilstangen aus Aluminium, einem anderen Metall oder einem Kunststoff. Bei dem gebogenen Grundelement kann es sich um ein Giebelelement handeln. Die Giebelelemente aller Tragmittel zusammen mit der Folie bilden den First der Folienüberdachung bzw. des Foliengewächshauses. Das Giebelelement weist zwei Schenkel auf, die einen spitzen bzw. flachen Winkel einschließen. Ein weiteres gebogenes Grundelement bildet jeweils ein Seitenelement. Jedes Tragmittel weist zwei gegenüberliegende Seitenelemente auf. Die Seitenelemente weisen Schenkel auf, die einen Winkel von 90 Grad bis etwa 170 Grad, vorzugsweise 90 Grad bis 135 Grad einschließen. Bei den geraden Grundelementen handelt es sich um stabförmige Verbindungselemente. Alle Grundelemente weisen Steckverbindungen, bzw. Schraubverbindungen oder Ähnliches an ihren Enden auf. Das Giebelelement ist mit den Schenkeln jeweils mit einem Ende eines Verbindungselements verbindbar. Das andere Ende der Verbindungselemente ist jeweils mit einem Ende eines Seitenelements verbunden. Das andere Ende des Seitenelements ist jeweils mit einem weiteren Verbindungselement verbunden. Diese Verbindungselemente sind vertikal ausgerichtet und bilden mit ihren freien Enden eine Verbindung zur Erde.

Weiter ist es vorgesehen, dass durch Variation der Länge bzw. der Anzahl der Verbindungselemente und/oder des Krümmungsradius der gebogenen Grundelemente die Form der Tragmittel bzw. der Folienüberdachung variierbar ist. Somit bilden die Grundelemente ein Baukastensystem für die Herstellung einer Folienüberdachung bzw. eines Foliengewächshauses. Je nach Bedarf lässt sich die Form der Tragmittel verändern. Weiter ist es besonders vorteilhaft, dass bei einem beschädigten Grundelement dieses gegen ein neues Element ausgetauscht werden kann.

Außerdem ist es vorgesehen, dass auch weitere Elemente der erfindungsgemäßen Folienüberdachung aus dem beschriebenen Grundelementen baukastenartig zusammenfügbar sind. So kann auch eine Umhausung bzw. eine Garage für die erfindungsgemäße Folienüberdachung aus den beschriebenen Grundelementen zusammengesetzt werden, insbesondere aus den gebogenen Seitenelementen, den geraden Verbindungselementen und dem Giebelelement. Bei Umhausungen die beispielsweise eine innere Wandung und eine äußere Wandung aufweisen, können beide Wandungen aus den genannten Grundelementen zusammengesetzt werden. Besonders vorteilhaft sind die Grundelemente für doppelwandigen Umhausungen einsetzbar, bei denen eine innere Wandung parallel zu einer äußeren Wandung angeordnet ist und nur in ihrer Dimensionierung kleiner ist. Hier müssen für die innere Wandung lediglich die Längen der Verbindungselemente gekürzt werden. Die Radien der gebogenen Seitenelemente bzw. des Giebelelements sind identisch mit denen der äußeren Wandung. Die Zwischenräume derartiger Tragmittel für Umhausungen sind mit einer festen Folie, Platten oder Ähnlichem ausfüllbar.

Ein Verfahren zur Lösung der eingangs genannten Aufgabe weist die Maßnahmen des Anspruchs 13 auf. Das Verfahren zum Stauen einer Folienüberdachung, insbesondere eines Foliengewächshauses, mit einer von stehend auf Schienen gelagerten Tragmittel geeigneten Folie, sieht es vor, zum Stauen die Tragmittel von einem freien Ende zu einem Stauende zu fahren.

Weiter ist es bevorzugt vorgesehen, dass die Folienüberdachung komplett in die Umhausung gefahren wird, vorzugsweise in der Umhausung zusammengefaltet wird. Die Länge der Umhausung bzw. die Länge der zusammengefalteten Folienüberdachung steht zu der Länge der ausgefahrenen Folienüberdachung in einem Verhältnis von 1 zu 3 bis 1 zu 30, vorzugsweise 1 zu 10.

Außerdem ist es erfindungsgemäß vorgesehen, dass zum Zusammenfahren der Überdachung die gesamte Folienüberdachung Richtung Umhausung bewegt wird und am Stauende die Abstände benachbarter Tragmittel verringert werden, vorzugsweise die Tragmittel am Stauende zusammengeführt werden.

Ein bevorzugtes Ausführungsbeispiel der Erfindung wird nachfolgend anhand der Zeichnung näher erläutert. In dieser zeigen:
- Fig. 1: eine Seitenansicht einer Folienüberdachung,
- Fig. 2: einen Querschnitt durch die Folienüberdachung,
- Fig. 3: eine Seitenansicht eines Tragmittels mit einem Fahrwerk,
- Fig. 4: eine Draufsicht auf zwei Fahrwerke,
- Fig. 5: eine Seitenansicht von verstauten Tragmitteln,
- Fig. 6: eine Ansicht eines Antriebsmittels der Folienüberdachung, und
- Fig. 7: eine Seitenansicht eines weiteren Ausführungsbeispiels.

Die hier gezeigten Vorrichtungen, und das damit durchführbare Verfahren dienen dem Stauen von Tragmitteln 12 und von den Tragmitteln 12 gehaltene Folie 13.

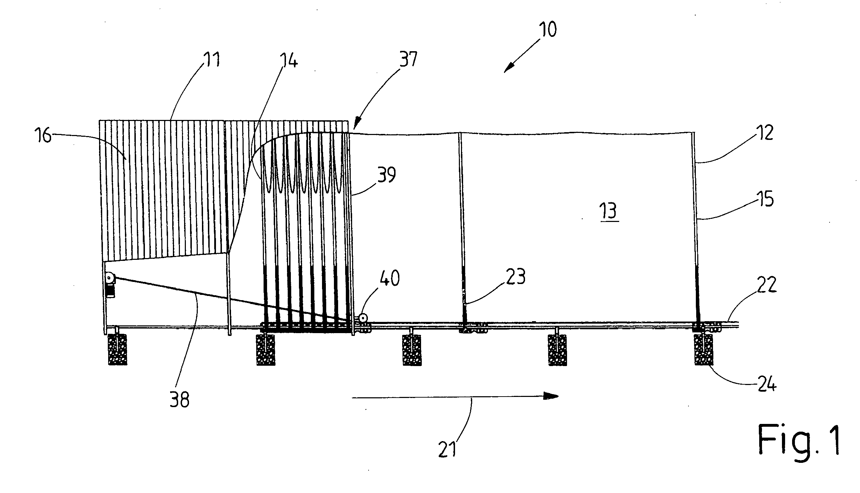

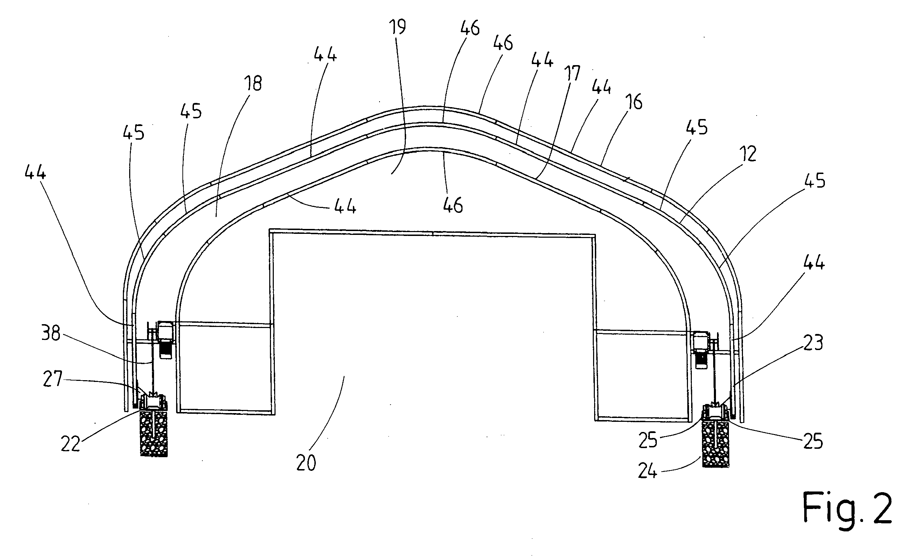

In der Fig. 1 ist ein Foliengewächshaus 10 dargestellt, das teilweise in einer Umhausung 11 gestaut ist. Das Foliengewächshaus 10 ist aufgebaut aus mehreren hintereinander angeordneten, parallelen Tragmitteln 12. Diese Tragmittel 12 weisen in dem dargestellten Ausführungsbeispiel eine bogenförmige Struktur auf (Fig. 2). Es ist aber auch denkbar, dass die Tragmittel 12 eine andere Form aufweisen wie beispielsweise eine Kasten- oder Trapezform.

Erfindungsgemäß kann jedes Tragmittel 12 aus Grundelementen verschiedener Sorten zusammengesetzt werden. Das in Fig. 2 dargestellte Tragmittel weist bogenförmige und gerade Grundelemente auf. Die vertikalen Seiten des Gewächshauses werden jeweils durch Verbindungselemente 44 gebildet. Die dachförmige Grundstruktur der Tragmittel 12 wird durch bogenförmige Seitenelemente 45 erreicht. Diese Seitenelemente 45 weisen zwei Schenkel auf, die einen spitzen bzw. einen flachen Winkel einschließen. Ein Schenkel ist jeweils mit einem vertikalen Verbindungselement 44 verbunden. Die andere Seite des Schenkels eines Seitenelements 45 ist entweder mit einem geraden Verbindungselement 44 verbunden, oder wie in Fig. 2 dargestellt, mit einem weiteren Seitenelement 45. Durch derartige Kombination von mehreren Seitenelementen 45 lässt sich jede beliebige Krümmung für das Tragmittel 12 erreichen. An das freie Ende eines weiteren Seitenelements 45 kann sich entweder ein weiteres gerades Verbindungselement 44 anschließen, oder ein Giebelelement 46. Das Giebelelement 46 weist ebenso wie die Seitenelemente 45 zwei Schenkel auf, die einen flachen oder einen spitzen Winkel einschließen. Die Giebelelemente 46 aller Tragmittel 45 zusammen mit der Folie 13 beschreiben den First des Foliengewächshauses 10. Die verschiedenen Grundelemente lassen sich zusammenstecken, zusammenschrauben oder auf sonstige Weise miteinander verbinden. Durch das einheitliche Stecksystem der einzelnen Grundelemente und deren Kompatibilität, insbesondere gleiche Rohrstärke etc., lässt sich aus den Grundelementen nahezu jede Tragmittelform herstellen. Es ist vorgesehen, dass auch andere Bestandteile des Foliengewächshauses aus den beschriebenen Grundelementen hergestellt werden können, wie beispielsweise die inner Wandung 17 und die äußere Wandung 16 der Umhausung 11.

Zwischen den Tragmitteln 12 ist eine Folie 13 gespannt. Diese Folie 13 ist fest mit den Tragmitteln 12 verbunden. In einem ausgefahrenen Zustand, ein zu überdachendes Feld abdeckend, ist die Folie 13 zwischen zwei aufeinanderfolgenden Tragmitteln 12 gespannt. Die Folie 13 ist jedoch so flexibel, dass sie bei Verringerung des Abstands zweier aufeinanderfolgender Tragmittel 12 leicht faltbar ist. Bei der Folie 13 kann es sich um eine für Foliengewächshäuser geläufige Folie 13 handeln. Vorzugsweise ist die Folie 13 UVbeständig und weist eine Stärke von einigen 10 µm bis zu einigen 100 µm auf.

Das Foliengewächshaus 10 ist an einer ersten Öffnung 14 und an einer zweiten Öffnung 15 offen. Der zweiten Öffnung 15 kann eine feste nicht dargestellte Wandung zugeordnet werden. Mit dieser Wandung kann das Foliengewächshaus 10 eine feste, schließende Verbindung eingehen. Außerdem ist es denkbar, dass die Wandung eine Tür bzw. ein Tor aufweist. Die Wandung ist fest an seiner Position befestigt und wird beim Verstauen des Foliengewächshauses 10 nicht bewegt. Zum Verstauen des Foliengewächshauses 10 wird die zweite Öffnung 15 von der Wandung entkoppelt. Die erste Öffnung 14 ist der Umhausung 11 zugewandt.

Die Umhausung 11 weist eine äußere Wandung 16 und eine innere Wandung 17 auf (Fig. 2). Die in der Fig. 1 dargestellte äußere Wandung 16 ist für eine bessere Anschauung aufgeschnitten. Die äußere Wandung 16 und die innere Wandung 17 sind in ihrer Form dem Querschnitt des Foliengewächshauses 10 bzw. den Tragmitteln 12 angepasst. Sowohl die äußere Wandung 16 als auch die innere Wandung 17 bilden eine feste Umhausung 11 für das gestaute Foliengewächshaus 10. Im gestauten Zustand des Foliengewächshauses 10 werden die Tragmittel 12 mit der gefalteten Folie 13 in einem Zwischenbereich 18, der von der äußeren Wandung 16 und der inneren Wandung 17 gebildet wird, gestaut. Dabei wird die gefaltete Folie 13 beim Stauen auf die innere Wandung 17 gezogen. Die Länge der Umhausung 11 ist so bemessen, dass das gestaute Foliengewächshaus 10 komplett in der Umhausung 11 gestaut werden kann.

Die Umhausung 11 weist eine Stirnseite 19 mit einer Öffnung 20 auf. Diese Öffnung kann als Tor oder Tür ausgebildet sein und dazu dienen, dass zu bewirtschaftende Feld zu versorgen (Fig. 2).

Das gesamte Foliengewächshaus 10 ist mit seinen Tragmitteln 12 entlang einer Längsachse 21 auf Schienen 22 bewegbar. Dabei ist jedem Ende 23 der bogenförmigen Tragmittel 12 jeweils eine Schiene 22 zugeordnet. In dem hier dargestellten Ausführungsbeispiel weist das Foliengewächshaus 10 zwei Schienen 22 auf, die parallel zu der Längsachse 21 ausgerichtet sind und sich über die gesamte Länge des Foliengewächshauses 10 erstrecken. Die Schienen 22 sind in regelmäßigem Abstand durch Verankerungen 24 fest mit der Erde verbunden (Fig. 1). Die Erfindung sieht es auch vor, dass die Schienen 22 auf einer Erhöhung positioniert sind.

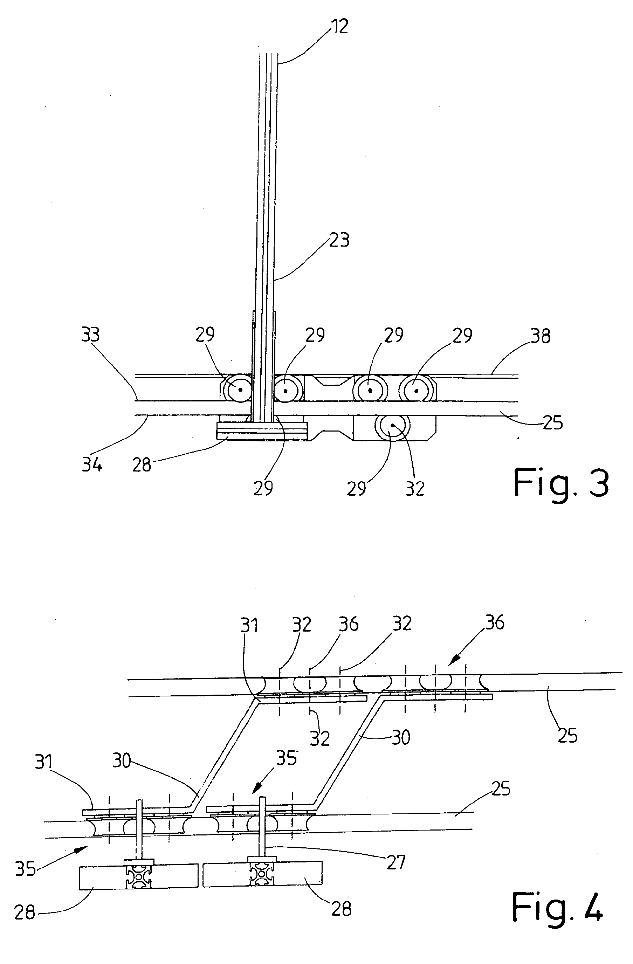

Die Schienen 22 weisen jeweils zwei parallele Schienenstränge 25 auf (Fig. 4). Jede Schiene 22 weist ein Paar parallel zu ihr verlaufende Schienenstränge 25 auf. Die Schienenstränge 25 können rohrartig ausgebildet sein, T-trägerförmig, doppel-T-trägerförmig oder ähnlich. Die rohrförmig ausgebildeten Schienenstränge 25 können zu der Versorgung des Foliengewächshauses 10 mit Elektrizität oder Wasser dienen. So kann beispielsweise in den Rohren Wasser fließen, welches über seitlich installierte nicht dargestellte Düsen der zu bewirtschaftenden Fläche zugefügt wird.

Den Enden 23 der Tragmittel 12 sind jeweils ein Fahrwerk 26 zugeordnet zum Verfahren auf den Schienen 22. Die Enden 23 der Tragmittel 12 sind über eine Halterung 27 mit dem Fahrwerk 26 verbunden. Am Ende 23 weisen die Tragmittel 12 einen Abstandhalter 28 auf (Fig. 4). Das in dem Ausführungsbeispiel dargestellte Fahrwerk 26 weist drei Laufräder 29 auf (Fig. 3). Die Laufräder 29 sind alle parallel zueinander und senkrecht zur Längsachse 21 des Foliengewächshauses 10 ausgerichtet. Die sechs Laufräder 25 sind in zwei Gruppen à drei Laufräder angeordnet. Die beiden Gruppen von Laufrädern eines Fahrwerks 26 sind über eine Verbindung 30 miteinander verbunden (Fig. 4). Diese Verbindung 40 ist als ein langgestrecktes "Z" ausgebildet. Den Endstegen 31 der Verbindung 30 sind jeweils eine Gruppe von Laufrädern 29 zugeordnet. Die Laufräder 29 einer Gruppe sind derart angeordnet, dass ihre Achsen 32 die Eckpunkte eines Dreiecks bilden. Die drei Laufräder einer Gruppe sind derart angeordnet, dass zwei Laufräder 29 einer Oberseite 33 und das weitere dritte Laufrad 29 eine Unterseite 34 eines Schienenstrangs 25 zugeordnet sind (Fig. 3). Diese Anordnung verhindert es, dass das Fahrwerk 26 sich von der Schiene 22 bzw. von den Seitensträngen 25 abheben kann.

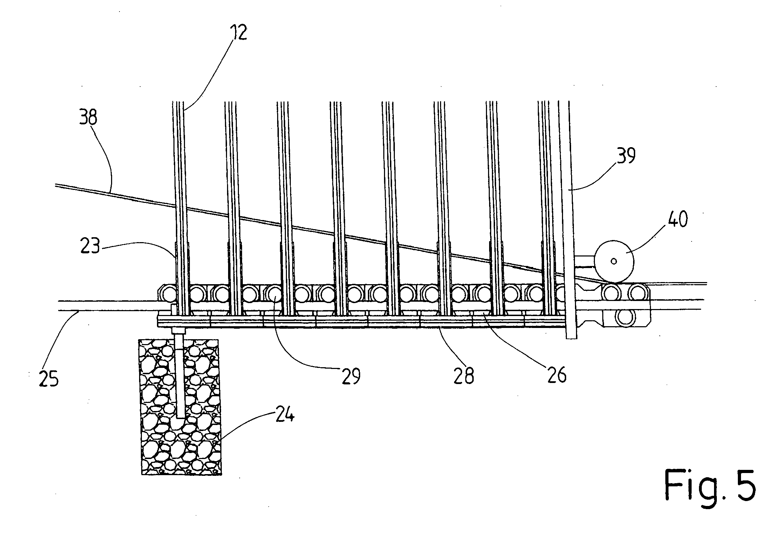

Die als langgestrecktes "Z" ausgebildete Verbindung 30 dient dazu, dass zwei aufeinanderfolgende Fahrwerke 26 sich auf den Seitensträngen 25 derart zusammenfahren lassen, dass eine erste Gruppe 35 eines Fahrwerks 26 gegenüber einer zweiten Gruppe 36 des folgenden Fahrwerks 26 positioniert ist (Fig. 4). Der Abstand zwischen zwei aufeinanderfolgenden Fahrwerken im gestauten Zustand des Foliengewächshauses 10 wird durch die Abstandshalter 28 definiert (Fig. 4, Fig. 5),.

Die Erfindung sieht es vor, dass das Foliengewächshaus 10 komplett in der Umhausung 11 verstaut werden kann. Dazu werden von einem Stauende 37 her die Abstände zweier aufeinanderfolgender Tragmittel 12 verringert bzw. zwei aufeinanderfolgende Tragmittel 12 zusammenbewegt (Fig. 5). Dabei wird immer das Tragmittel 12, das dem Stauende 37 am nächsten liegt, in die Umhausung 11 geführt. Die bereits zusammengefügten Tragmittel 12, die sich in der Umhausung befinden, werden dabei sukzessive weiter in die Umhausung 11 gedrückt (Fig. 1). Die noch nicht gestauten Tragmittel 12, die sich noch außerhalb der Umhausung 11 befinden, werden dabei gleichzeitig entlang der Längsachse 21 in die Umhausung 11 gezogen, und zwar ist dabei die Folie noch zwischen zwei aufeinanderfolgenden Tragmitteln 12 gespannt. Sobald die Tragmittel 12 in der Umhausung 11 gestaut werden, faltet sich die Folie 13 zwischen den aufeinanderfolgenden Tragmittel 12 und wird beim Bewegen in die Umhausung 11 über die innere Wandung 17 gezogen.

Im gestauten Zustand sind die Tragmittel 12 bzw. die Fahrwerke 26 derart zusammengefahren, dass sich ihre Abstandshalter 28 nahezu berühren bzw. berühren (Fig. 5). In diesem zusammengestauten Zustand beträgt die Länge des Foliengewächshauses 10 nur ^{1/}3 bis ¹/30, vorzugsweise ¹/10, der Gesamtlänge des Foliengewächshauses 10 im ausgefahrenen, nicht gestauten Zustand.

Die Tragmittel 12 werden beim Stauen des Foliengewächshauses 10 in die Umhausung 11 an Führungsseilen 38 in die Umhausung gezogen. Erfindungsgemäß ist es vorgesehen, dass jeder Schiene 22 jeweils ein Führungsseil 38 zugeordnet ist. Das Führungsseil 38 ist mit jedem Fahrwerk 26 verbunden. Beim Stauen des Foliengewächshauses 10 wird das gesamte Foliengewächshaus 10 über die Fahrwerke 26 in die Umhausung 11 gezogen. Sobald ein Tragmittel das Stauende 37 erreicht hat, wird das Führungsseil 38 von dem Fahrwerk 26 des entsprechenden Tragmittels 12 getrennt. Dazu weist ein Rahmen 39 an der Umhausung 11 eine Rolle 40 auf, die der Führung des Führungsseils 38 dient (Fig. 5).

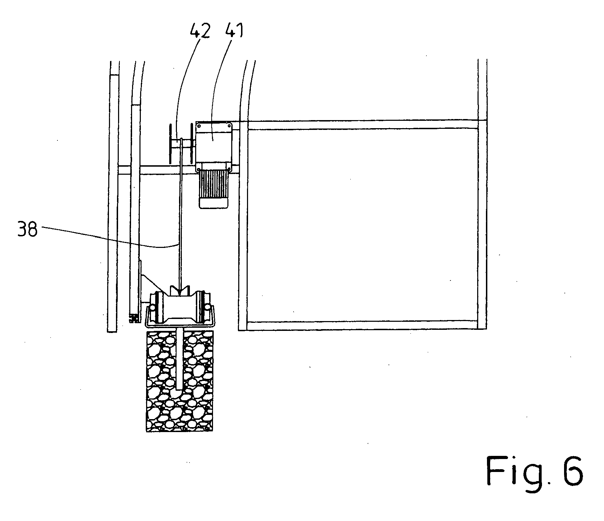

Jedem Führungsseil 38 einer Schiene 22 ist ein Antriebsmittel, insbesondere ein Motor 41, zugeordnet (Fig. 6). Durch diesen Motor 41 wird über eine Welle 42 das Führungsseil 38 bewegt. An der der Umhausung 11 entgegengesetzten Seite des Foliengewächshauses 10 ist den Schienen 22 jeweils eine nicht dargestellte Umlenkrolle zugeordnet. Über die Umlenkrolle bewegt sich das Führungsseil 38 in eine Art Endlosschleife. Für das Ausfahren des Gewächshauses 10 werden die Fahrwerke 26 der Tragmittel 12 durch das Führungsseil 38 entsprechend wieder aus der Umhausung 11 hinausgezogen. Das Hinausbewegen des gestauten Foliengewächshauses 10 aus der Umhausung 11 erfolgt derart, dass nacheinander die Folie 13 zwischen zwei aufeinanderfolgenden Tragmitteln 12 gespannt werden. Es wird somit zunächst der Abstand von zwei aufeinanderfolgenden Tragmitteln 12 maximiert, bevor das folgende Tragmittel 12 bewegt wird. Der Motor 41 ist in der Umhausung 11 vorzugsweise an der inneren Wandung 17 der Umhausung 11 befestigt.

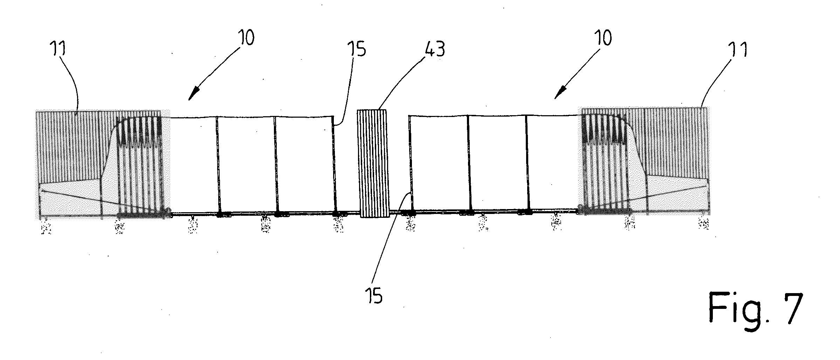

In der Fig. 7 ist ein weiteres Ausführungsbeispiel der vorliegenden Erfindung dargestellt. Bei diesem Ausführungsbeispiel befinden sich zwei Foliengewächshäuser 10 der oben beschriebenen Art auf einer gemeinsamen Längsachse 21, und zwar derart, das ihre zweiten Öffnungen 15 sich gegenüberstehen. Es ist nun vorgesehen, dass sich die beiden Foliengewächshäuser 10 über ein Verbindungssegment 43 miteinander zusammenkoppeln lassen. Durch das Zusammenkoppeln der beiden Foliengewächshäuser 10 verdoppelt sich die ursprüngliche Länge der einzelnen Foliengewächshäuser 10. Das Verbindungssegment 43 weist Schließmittel auf, die mit den zweiten Öffnungen 15 korrespondieren. Somit lassen sich die Foliengewächshäuser 10 fest über das Verbindungssegment 43 verbinden.

**Bezugszeichenliste:**

| | | | |
|---|---|---|---|
| 10 | Foliengewächshaus | 36 | zweite Gruppe |
| 11 | Umhausung | 37 | Stauende |
| 12 | Tragmittel | 38 | Führungsseil |
| 13 | Folie | 39 | Rahmen |
| 14 | erste Öffnung | 40 | Rolle |
| 15 | zweite Öffnung | 41 | Motor |
| 16 | äußere Wandung | 42 | Welle |
| 17 | innere Wandung | 43 | Verbindungssegment |
| 18 | Zwischenbereich | 44 | Verbindungselement |
| 19 | Stirnseite | 45 | Seitenelement |
| 20 | Öffnung | 46 | Giebelelement |
| 21 | Längsachse | | |
| 22 | Schiene | | |
| 23 | Ende | | |
| 24 | Verankerung | | |
| 25 | Schienenstrang | | |
| 26 | Fahrwerk | | |
| 27 | Halterung | | |
| 28 | Abstandshalter | | |
| 29 | Laufrad | | |
| 30 | Verbindung | | |
| 31 | Endsteg | | |
| 32 | Achse | | |
| 33 | Oberseite | | |
| 34 | Unterseite | | |
| 35 | erste Gruppe | | |

## Patentansprüche

1. Folienüberdachung, insbesondere Foliengewächshaus (10), mit einer von Tragmitteln (12) gehaltenen Folie (13), **dadurch gekennzeichnet, dass** die Tragmittel (12) stehend auf Schienen (22) gelagert und auf den Schienen (22) verfahrbar sind.

2. Folienüberdachung nach Anspruch 1, **dadurch gekennzeichnet, dass** die Schienen (22) parallel zu einer Längsachse (21) der Folienüberdachung orientiert sind, entlang der die Tragmittel (12) verfahrbar sind und auf der Erde oder Erhöhungen z.B. Wänden, Tragwerken oder dergleichen angeordnet sind, und die Schienen (22) insbesondere aus zwei parallelen Schienensträngen (25) gebildet sind, denen jeweils mindestens ein Fahrwerk (26), vorzugsweise eine der Anzahl der Tragmittel (12) entsprechenden Anzahl von Fahrwerken (26), zugeordnet ist.

3. Folienüberdachung nach Anspruch 1 oder 2, **dadurch gekennzeichnet, dass** die Tragmittel (12) unten offene Tragbögen sind, die freie Enden (23) aufweisen, denen jeweils ein Fahrwerk (26) zugeordnet ist, und insbesondere das Fahrwerk (26) zwei parallele Gruppen von Laufrädern (29) aufweist, wobei jedem Schienenstrang (25) eine Gruppe zugeordnet ist und die Laufräder (29) einer Unter- und/ oder einer Oberseite (35, 34) des Schienenstrangs (25) zugeordnet sind.

4. Folienüberdachung nach einem der vorhergehenden Ansprüchen, **dadurch gekennzeichnet, dass** die parallele Gruppen von Laufrädern (29) eines Fahrwerks (26) derart in Richtung der Längsachse (21) versetzt sind, dass die Fahrwerke (26) zweier aufeinanderfolgender Tragmittel (12) ineinanderfahrbar sind, vorzugsweise sich die Folie (13) zwischen zwei aufeinanderfolgenden Tragmitteln (12) bei Verringerung des Abstandes der aufeinanderfolgenden Tragmittel (12) zwischen die Tragmittel (12) fügt, insbesondere faltet.

5. Folienüberdachung, insbesondere Foliengewächshaus (10), mit einer von Tragmitteln (12) gehaltenen Folie (13), vorzugsweise gemäß den Ansprüchen 1 bis 7, **dadurch gekennzeichnet, dass** die Tragmittel (12) mit der Folie (13) in einer Umhausung (11) staubar sind.

6. Folienüberdachung nach Anspruch 5, **dadurch gekennzeichnet, dass** die Tragmittel (12) mit den Folien (13) nacheinander bzw. hintereinander in der Umhausung (11) verstaubar sind und zwar beginnend mit einem der Umhausung (11) zugeordnetem Stauende (37) der Folienüberdachung nächstem Tragmittel (12), vorzugsweise laufen die Tragmittel (12) am Stauende (37) zusammen.

7. Folienüberdachung nach Anspruch 5 oder 6, **dadurch gekennzeichnet, dass** jedem Tragmittel (12) mindestens ein Führungsseil (38) zugeordnet ist, vorzugsweise einem Ende (23) jedes Tragmittels (12) dasselbe Führungsseil (38) zugeordnet ist, wobei die Führungsseile (38) beim Verstauen der Tragmittel (12) von jedem Tragmittel (12) einzeln abkoppelbar sind.

8. Folienüberdachung nach einem der Ansprüche 5 bis 7, **dadurch gekennzeichnet, dass** die Umhausung (11) eine äußere Wandung (16) und eine Innere Wandung (17) aufweist, zwischen denen die Tragmittel (12) und die Folie (13) staubar sind und eine Stirnseite (19) der Umhausung (11) eine Öffnung (20) aufweist, insbesondere ein verschließbares Tor.

9. Folienüberdachung nach einem der Ansprüche 5 bis 8, **dadurch gekennzeichnet, dass** der Umhausung (11) Mittel, vorzugsweise Motoren (41), zugewiesen sind, um die Tragmittel (12) an den Führungsseilen (38) entweder in der Umhausung (11) zu stauen, oder aus der Umhausung (11) herauszufahren.

10. Folienüberdachung, insbesondere Foliengewächshaus (10), mit einer von Tragmitteln (12) gehaltenen Folie (13), vorzugsweise gemäß den Ansprüchen 1 bis 12, **dadurch gekennzeichnet, dass** die Tragmittel (12) aus mehreren Grundelementen verschiedener Sorten aufgebaut sind.

11. Folienüberdachung nach Anspruch 10, **dadurch gekennzeichnet, dass** die Tragmittel (12) aus gebogenen und geraden Grundelementen zusammengesetzt sind, vorzugsweise aus einem gebogenem Giebelelement (46), zwei seitlichen Bogenelementen (45) und mehreren geraden Verbindungselementen (44), die beliebig zusammenfügbar, insbesondere zusammensteckbar und/oder zusammenschraubbar sind.

12. Vorrichtung nach Anspruch 10 oder 11, **dadurch gekennzeichnet, dass** durch Variation der Länge bzw. der Anzahl der Verbindungselemente (44) und/oder des Krümmungsradius der gebogenen Grundelemente (45) die Form der Tragmittel (12) bzw. der Folienüberdachung variierbar ist.

13. Verfahren zum Stauen einer Folienüberdachung, insbesondere eines Foliengewächshauses (10), mit einer von stehend auf Schienen (22) gelagerten Tragmitteln (12) gehaltenen Folie (13), wobei zum Stauen die Tragmittel (12) von einem freien Ende zu einem Stauende (37) gefahren werden.

14. Verfahren nach Anspruch 13, **dadurch gekennzeichnet, dass** die Folienüberdachung komplett in die Umhausung (11) gefahren wird, vorzugsweise in der Umhausung (11) zusammen gefaltet wird.

15. Verfahren nach Anspruch 13 oder 14, **dadurch gekennzeichnet, dass** zum Zusammenfahren der Folienüberdachung die gesamte Folienüberdachung Richtung Umhausung (11) bewegt wird und am Stauende (37) die Abstände benachbarter Tragmittel (12) verringert werden, vorzugsweise die Tragmittel (12) am Stauende (37) zusammengeführt werden.
